# EUROPEAN PATENT APPLICATION

(11) **EP 2 378 254 A2**
(43) Date of publication of application: **19.10.2011**
(21) Application number: 11162695.8
(22) Date of filing: 15.04.2011
(51) Int. Cl.: G01F 1/684

(54) **Robust sensor with top cap**

(30) Priority: 19.04.2010 US 762797
(71) Applicant: Honeywell International, Inc., Morristown, New Jersey 07962-2245 (US)
(72) Inventor: Beck, Scott Edward, Murphy, TX 75094 (US); Davis, Richard Alan, Plano, TX 75023 (US); Morales, Gilberto, Arlington, TX 76006 (US); Stewart, Carl, Plano, TX 75023 (US); Wang, Yong-Fa, Coppell, TX 70019 (US)
(74) Representative: Buckley, Guy Julian

(57) **Abstract**

A robust sensor, such as a robust flow sensor or pressure sensor, is provided. In one illustrative embodiment, a robust flow sensor includes one or more flow sensor components (512) secured relative to a membrane, and a substrate for supporting the membrane. In some cases, the one or more flow sensor components (512) may be substantially thermally isolated from the substrate by the membrane. One or more wire bond pads may be situated adjacent to a first side of the substrate and may be provided for communicating signals relative to the one or more flow sensor components (512). A top cap (552) may be situated adjacent to the first side of the substrate and secured relative to the substrate. The top cap (552) may define at least part of a fluid inlet (556) and/or an outlet (558) of the flow sensor assembly (500), and may at least partially define a flow channel that extends from the inlet (556), past at least one of the one or more flow sensor components (512), and out the outlet (558) of the flow sensor assembly (500). The top cap (552) may be structured and attached relative to the first side of the substrate such that the one or more wire bond pads are not exposed to a fluid in the flow channel, but are accessible for electrical connection to an external device. While a flow sensor is used as an example, it is contemplated that any suitable sensor may be used, as desired.

## Description

### Technical Field

The disclosure relates generally to sensors, and more particularly, to robust sensors that are configured to sense a property of a fluid.

### Background

Sensors are commonly used to sense one or more properties of a fluid. For example, flow sensors and pressure sensors are used in a wide variant of applications such as in industrial process control, medical devices, engines, and so on. Flow sensors are often used to measure flow rates of fluids, and provide flow signals for instrumentation and/or control. Likewise, pressure sensors are often used to measure pressure of fluids, and provide pressure signals for instrumentation and/or control. These are just a few examples of sensors that can be used to sense one or more properties of a fluid. Some sensors may be vulnerable when exposed to the fluid that is to be sensed. For example, a sensor may be vulnerable or sensitive to moisture, particulate matter, corrosive properties or other conditions of a fluid to be sensed. In some cases, the accuracy and/or reliability of the sensor may be affected. Thus, a need exists for robust sensors.

### Summary

The disclosure relates generally to sensors, and more particularly, to sensors that are configured to sense a property of a fluid. In one illustrative embodiment, a flow sensor assembly for providing a measure of fluid flow from an inlet to an outlet includes one or more flow sensor components secured relative to a membrane, and a substrate for supporting the membrane. In some cases, the one or more flow sensor components may be substantially thermally isolated from the substrate by the membrane. One or more wire bond pads may be situated adjacent to a first side of the substrate and may be provided for communicating signals relative to the one or more flow sensor components. A top cap may be situated adjacent to the first side of the substrate and secured relative to the substrate. The top cap may define at least part of the inlet and/or the outlet of the flow sensor assembly and may at least partially define a flow channel that extends from the inlet, past at least one of the one or more flow sensor components, and out the outlet of the flow sensor assembly. The top cap may be structured and attached relative to the first side of the substrate such that the one or more wire bond pads are not exposed to the fluid in the flow channel, but are accessible for electrical connection to an external device. While a flow sensor is used as an example, it is contemplated that any suitable sensor may be used, as desired.

The above summary is not intended to describe each and every disclosed illustrative example or every implementation of the disclosure. The Description that follows more particularly exemplifies various illustrative embodiments.

### Brief Description of the Figures

The following description should be read with reference to the drawings. The drawings, which are not necessarily to scale, depict selected illustrative embodiments and are not intended to limit the scope of the disclosure. The disclosure may be more completely understood in consideration of the following description of various illustrative embodiments in connection with the accompanying drawings, in which:
Figure 1 is a schematic top view of an illustrative flow sensor die;
Figure 2 is a schematic cross-sectional view of the illustrative flow sensor die of Figure 1 taken along line 2-2;
Figure 3 is a schematic top view of another illustrative flow sensor die;
Figure 4 is a schematic cross-sectional view of the illustrative flow sensor die of Figure 3 taken along line 4-4;
Figure 5 is a schematic perspective view of a flow sensor assembly shown in partial cross-section with an inlet and an outlet formed in an upper cap wall;
Figure 6 is a schematic perspective view of a flow sensor assembly with an inlet and/or outlet formed in side wall(s) of the cap;
Figure 7 is a schematic perspective view of a flow sensor assembly with an inlet and/or outlet formed collectively by the flow sensor die substrate and side wall(s) of the cap; and
Figure 8 is a flowchart of a method of forming a flow sensor assembly having a flow sensor die and a cap.

### Description

The following description should be read with reference to the drawings, in which like elements in different drawings are numbered in like fashion. The drawings, which are not necessarily to scale, depict selected illustrative embodiments and are not intended to limit the scope of the disclosure. Although examples of construction, dimensions, and materials are illustrated for the various elements, those skilled in the art will recognize that many of the examples provided have suitable alternatives that may be utilized.

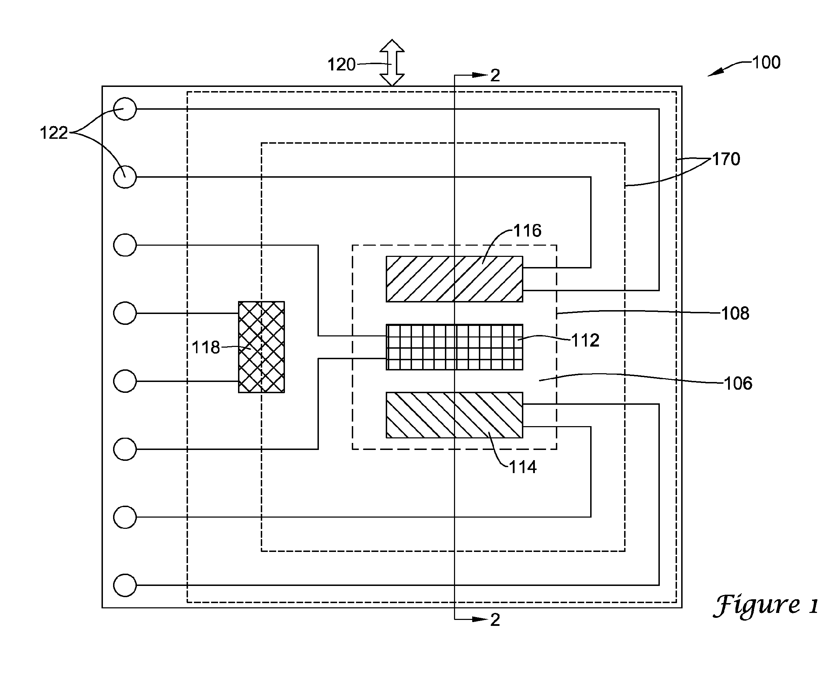

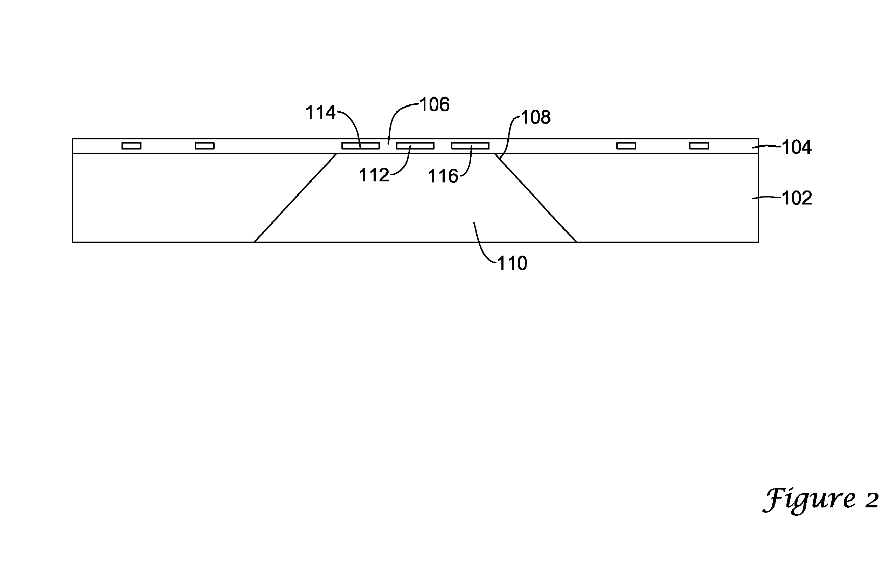

Figure 1 is a schematic top view of an illustrative flow sensor die 100. While a flow sensor is used as an example in this disclosure, it is contemplated that any suitable sensor may be used, as desired. The illustrative flow sensor die 100 may be fabricated as one of a plurality of flow sensor dies on a silicon wafer, if desired, although it is contemplated that any suitable substrate material may be used. Figure 2 is a schematic cross-sectional view of the illustrative flow sensor die 100 of Figure 1, taken along section line 2-2. The illustrative flow sensor die 100 includes a substrate 102 (see Figure 2), which may be silicon or any other suitable material, and may be overlaid with one or more thin film layers 104. References to "over," "under," "top," and "bottom," etc., are relative terms and are made herein with respect to the drawings and do not necessarily correspond to any particular orientation in actual physical space. Thin film layer or layers 104 may be formed from any suitable materials, using any suitable manufacturing technique(s), such as thin film deposition methods. Suitable thin film materials may include silicon, silicon oxide, silicon nitride, silicon oxynitride, and/or any other suitable material or material combinations.

In some cases, thin film layers 104 may form a membrane 106 supported by substrate 102. Membrane border 108 may demark the area of thin film layers 104 that form the membrane. A void 110 (see Figure 2) formed in substrate 102 may underlie the membrane 106. Void 110 may be formed in any suitable manner, such as silicon etching. When etching is used to form void 110, a bottom-most of thin film layers 104 may be an etch-stop layer, but this is not required. An etch-stop layer may be a separate layer such as an oxide or other layer, as desired. Etching of the void 110 may result in a membrane of well-defined thickness.

One or more flow sensor components may be secured relative to membrane 106. In the example shown, a heater 112 and sense resistors 114 and 116 are provided in or on the thin film layers 104 as flow sensor components. Heater 112 and sense resistors 114, 116 (sensor elements) may be components of a Wheatstone bridge flow sensor, for example as described in U.S. Patent No. 7,278,309, "INTERDIGITATED, FULL WHEATSTONE BRIDGE FLOW SENSOR TRANSDUCER," Dmytriw et al., which is hereby incorporated by reference in its entirety. The illustrative flow sensor die 100 may include other flow sensor components not disposed in or on the membrane 106, such as a temperature resistor 118. All of, or a subset of, flow sensor components may be referred-to more generally as a "flow sensor."

In the example provided, flow sensor components may be formed in or on the thin film layers 104 with any suitable methods. For example, resistive components may be deposited and defined on top of lower membrane thin film layer(s). A variety of thin film resistor materials are available, including platinum, doped polysilicon, doped crystalline silicon, Permalloy, SiCr, tantalum, tantalum nitride, chromalloy, nichrome, and/or any other suitable material or material combination. After resistor definition, a thin film protective layer such as silicon nitride may be deposited over the resistors. Etching of the void 110 may be performed after deposition of the resistors and thin film layers. Any suitable etching technique may be used, such as wet etching with anisotropic etchants (e.g., KOH, TMAH, or EDP) or dry, deep reactive ion etching.

In a flow sensor incorporating flow sensor die 100, fluid may be directed to flow past flow sensor components secured to and/or disposed in or on membrane 106. In the example shown, fluid flow may flow in the direction denoted by directional arrows 120. Heater 112 may dissipate electrical energy as heat, warming the fluid in its proximity. The resistor 114 is shown positioned downstream of the heater 112, and resistor 116 is shown positioned upstream (or visa-versa). A temperature differential between the sense resistors 114 and 116 may result, depending on the fluid flow rate.

Performance of the flow sensor may be dependent on heat transferred to the sense resistors 114 and 116 from the fluid, and not through other heat conduction paths. In the embodiment shown, membrane 106 may substantially thermally isolate the heater 112 and sense resistors 114, 116, and/or other flow sensor components if any, from the substrate. Without such thermal isolation, heat may be conducted to/from the flow sensor components from/to the substrate, which may reduce the sensitivity and/or performance of the sensor. Material selection may provide an additional or alternative way to thermally isolate flow sensor components, which may be used in flow sensors with or without thermally-isolating membranes. For example, low thermal conductivity substrate materials that may be used, such as fused silica, fused quartz, and/or borosilicate glass. Additionally or alternatively, thermal isolation may be achieved on a substrate with low thermal conductivity thin films such as oxidized porous silicon, aerogels, or any other suitable materials.

In the example shown, flow sensor die 100 may include one or more wire bond pads 122 situated adjacent or on substrate 102. In some illustrative embodiments, the wire bond pads are situated along one side of the substrate, as in Figure 1, but this is not required. In some illustrative embodiments, wire bond pads 120 may be disposed along multiple die edges, or at other locations on the sensor die 100, as desired. Wire bond pads 120 may be configured for communicating signals relative to the one or more flow sensor components, such as heater 112, sense resistors 114, 116, and/or temperature resistor 118. Wire bond pads may include or be formed primarily of gold, aluminum, copper, or any other suitable conductor material or material combination, as desired. Traces may be provided to electrically connect the wire bond pads to appropriate flow sensor components.

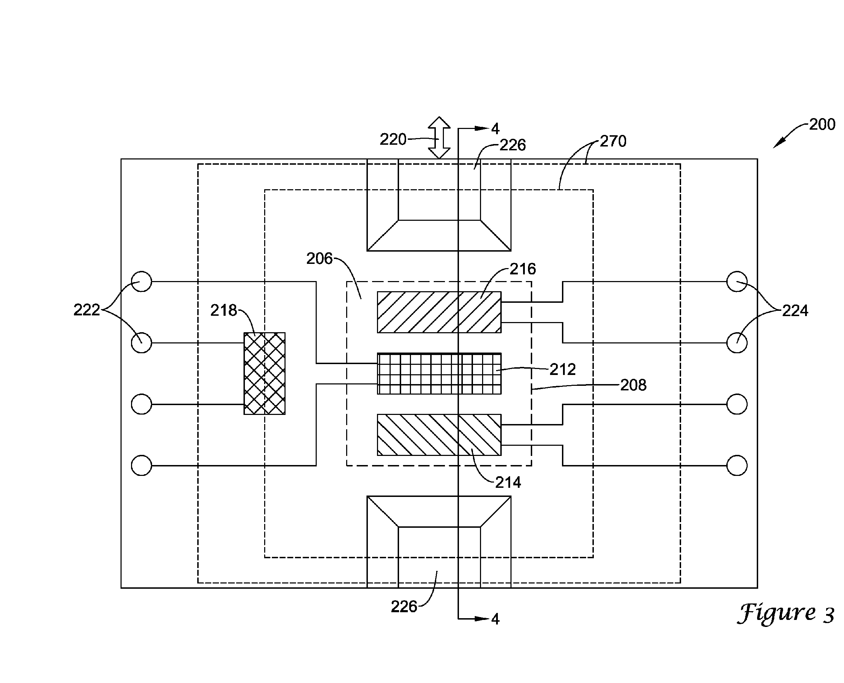

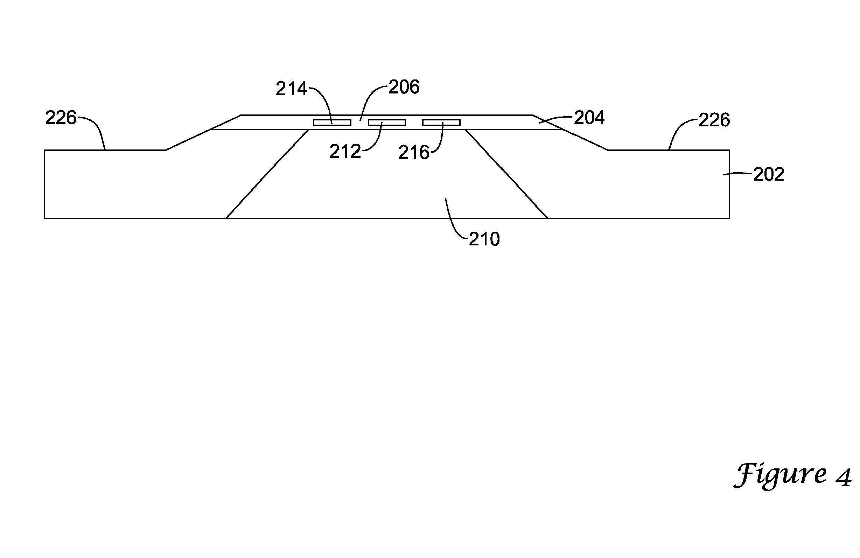

Other flow sensor die configurations are contemplated. Figures 3 and 4 are a schematic top view and schematic cross-sectional view, respectively, of another illustrative flow sensor die 200. The illustrative flow sensor die 200 shares a number of features with flow sensor die 100. Flow sensor die 200 may include a membrane 206 of thin film layers 204 supported by a substrate 202, with one or more flow sensor components disposed on the membrane, such as a heater 212 and sense resistors 214, 216. Flow sensor die 200 differs from flow sensor die 100 in some aspects. For example, wire bond pads are disposed on both the left (222) and right (224) sides of flow sensor die 200. Also, grooves 226 are formed in the die to define, at least in part, an inlet and an outlet of a flow channel that extends past at least one of the flow sensor components.

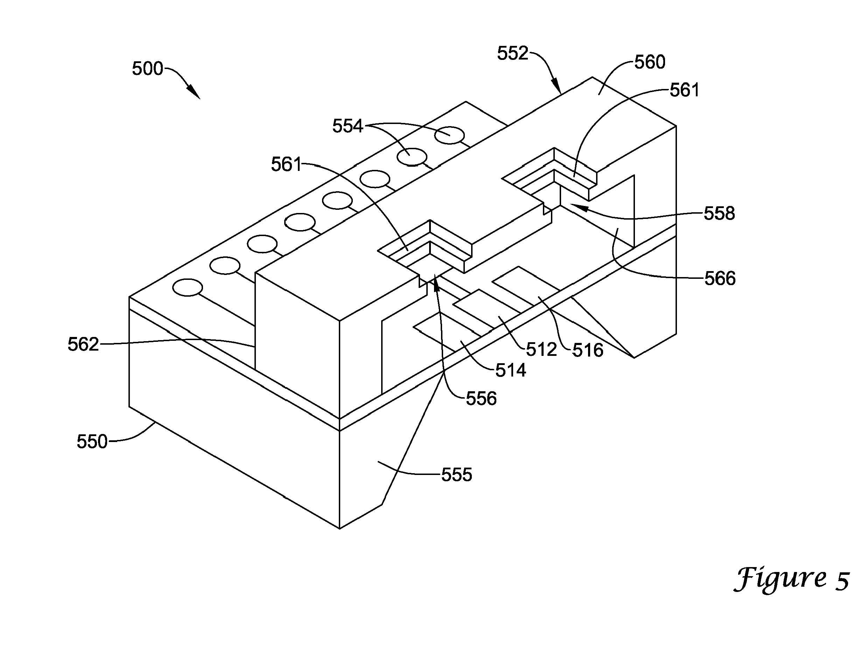

In an illustrative embodiment, flow sensor dies such as dies 100 and 200 may be combined with a top cap to form a flow sensor assembly for providing a measure of fluid flow. Figure 5, for example, shows a schematic perspective view of a flow sensor assembly 500 shown partially in cross-section. Flow sensor assembly 500 includes a flow sensor die 550, which may be similar or identical to flow sensor dies 100 or 200, or any other suitable flow sensor die. A top cap 552 is shown situated adjacent to the side of flow sensor die 550 to which wire bond pads 554 are situated, and may be secured relative to the substrate 555. Top cap 552 may define apertures that at least partially define an inlet 556 and an outlet 558 of the flow sensor assembly 500. The terms "Inlet" and "outlet" maybe be arbitrary, and may change in practice depending on the direction of fluid flow. The apertures may be configured with stops 561 or other structures to facilitate interfacing the flow sensor assembly with fluid flow tubes, hoses, or the like. As illustrated in Figure 5, top cap 552 may include an upper cap wall 560 and side walls 562 extending down from a perimeter of the upper cap wall 560, with the side walls attached relative to the side of the substrate 555 that includes the wire bond pads 554. Top cap 552 of Figure 5 has an inlet 556 and an outlet 558 formed through the upper cap wall 560. In some illustrative embodiments, one or both of the inlet 556 and outlet 558 may be formed through at least part of one or more side walls 562 of a top cap 552, as described further herein.

Top cap 552 may at least partially define a flow channel that extends from the inlet 556, past at least one of the one or more flow sensor components 512, 514, 516, and out the outlet 558 of the illustrative flow sensor assembly 500. The flow channel may be at least partially defined by at least one interior surface of the top cap, such as surface 566. The flow sensor die 550 and/or flow sensor die substrate 555 may at least partially define another part of the flow channel, as shown.

Top cap 552 may be structured and attached relative to the side of the substrate 555 that is facing the one or more wire bond pads 554 such that the one or more wire bond pads are not exposed to the flow channel, but are accessible for electrical connection to an external device. The top cap 552 may be considered to fluidly isolate the one or more wire bond pads 554 from the flow channel. In each of Figures 1 and 3, fine dashed lines 170 and 270, respectively, approximately demark interface regions where top caps such as cap 552 are attached relative to substrate 102 or 202. It may be seen in these Figures that the interface regions may extend between the flow sensor components (or flow sensors), and the wire bond pads 120, 222, 224. It may also be seen that the interface regions may extend around the perimeters of the flow sensors. In some illustrative embodiments, at least one side wall of a top cap may extend between and separate at least one of the wire bond pads from the flow sensor or flow sensor components.

Top cap 552, or any other top cap of the present disclosure, may be formed of any suitable material or materials. Top caps may be formed substantially of glass, and may be substantially optically transparent, if desired. Fabrication of glass top caps may be accomplished with micro abrasive jet machining (also referred to as precision micro sandblasting, swarm sandblasting, or power blasting), ultrasonic drilling, laser micromachining, etching, or any other suitable method. Possible cap materials include borosilicate glass, fused silica, quartz, or any other suitable material. A cap material with a low thermal conductivity may be employed, which may help reduce the transfer of heat from the fluid steam. In some cases, cap materials with thermal conductivities of less than about 2, 1.5, 1.4, 1.3, 1.2, 1.1, or 1 W/m·°K may be used. A cap material with a coefficient of thermal expansion (CTE) close to that of a substrate material (e.g., silicon) of the flow sensor die, may be used. Matching or substantially matching CTEs for caps and substrates may result in increased thermal robustness for flow sensor assemblies. In some cases, materials are used for caps and substrates with values for CTEs within 50, 40, 30, 20, or 10% of each other. Any suitable method may be used to attach and seal the caps to the flow sensor dies to form flow sensor assemblies. For a glass cap, glass frit bonding may be used, if desired. With some glasses, anodic bonding may be used. In some instances, transparent caps may allow optical methods of alignment when the caps are attached to flow sensor dies to form the flow sensor assemblies.

It is contemplated that plastic caps may also be used, and such caps may be micro-molded, machined or formed in any other suitable manner. Adhesives may be used to attach such plastic caps (or glass caps). Epoxy, silicone, or other adhesives may be used for attachment, as desired.

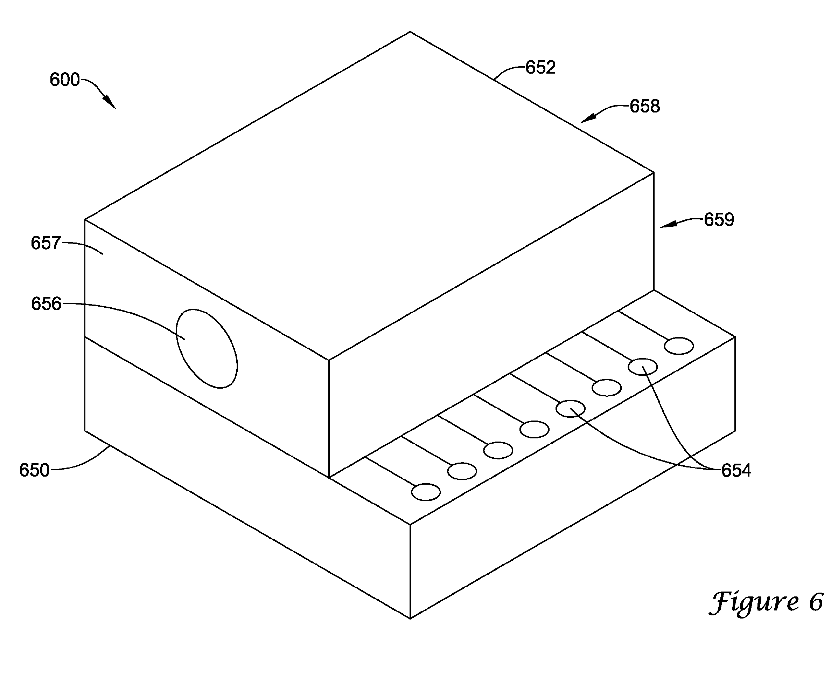

Other cap configurations are also contemplated. For example, Figure 6 is a schematic perspective view of a flow sensor assembly 600 having a cap 652 situated adjacent and secured relative to the side of a flow sensor die substrate 650 that faces the wire bond pads 654. Top cap 652 may include one or more apertures formed through one or more of the side walls of the top cap 652. In the example shown, an inlet 656 may be formed through a first side wall 657 of the top cap 652, and an outlet 658 (not seen in this view) may be formed through a second side wall 659 of the top cap 652. Cap 652 may at least partially define a flow channel that extends from the inlet 656, past at least one flow sensor component, and out the outlet 658. While both the inlet and the outlet are shown in side walls of the top cap 652, it is contemplated that one of in the inlet and outlet may be formed in the upper wall of the top cap 652, similar to that shown in Figure 5.

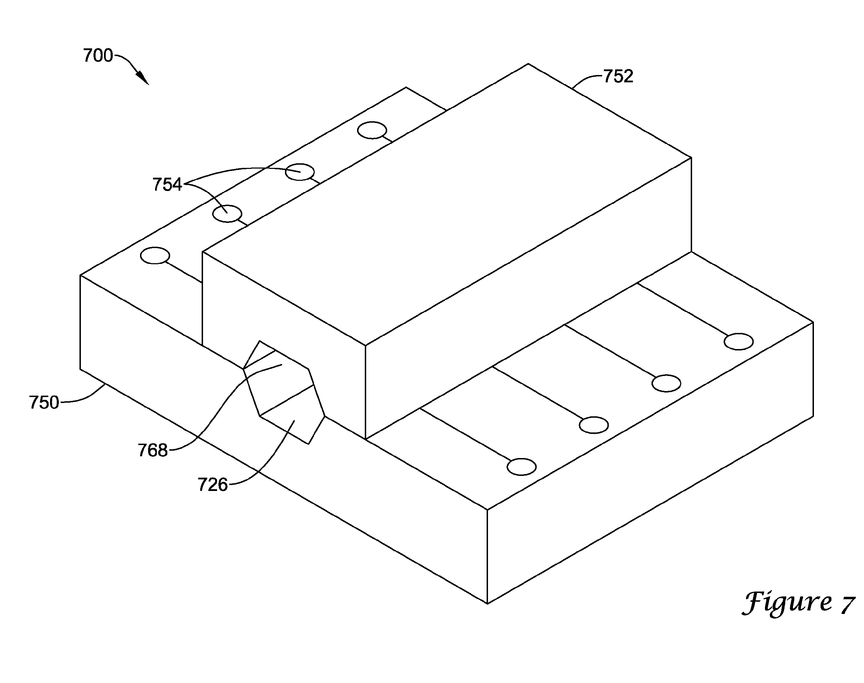

Figure 7 is a schematic perspective view of another flow sensor assembly 700 having a top cap 752 situated adjacent and secured relative to the side of a flow sensor die substrate 750 that faces the wire bond pads 754. Flow sensor die substrate 750 may be similar to that of flow sensor die 200 of Figure 3, and may have grooves or depressions 726 formed in the die extending to an edge of the flow sensor die as shown. In some embodiments, top cap 752 may also be formed to include one or more grooves or depressions 768 extending to an edge of the cap, and may be registration with the grooves or depressions 726 formed in the flow sensor die, such that the depression 726 in the top cap 752 in conjunction with the depression 726 in the flow sensor die 750 define one or more of the inlet and/or outlet of the flow sensor assembly 700. In some illustrative embodiments, an inlet or outlet of a flow sensor assembly may be defined by a groove in only one of either the cap or substrate, with an un-grooved portion of the substrate or top cap, respectively, defining a complementary portion of the perimeter of the inlet or outlet.

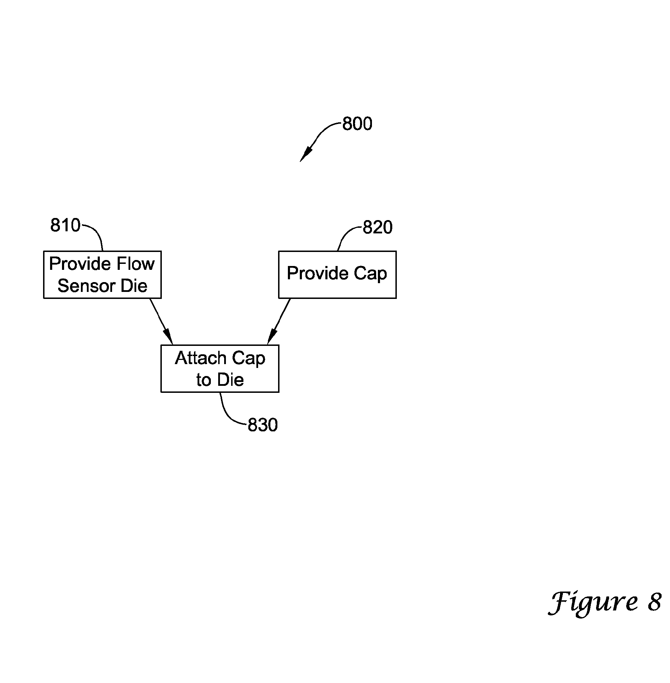

Figure 8 is a flowchart that illustrates a method 800 of forming a flow sensor assembly having a flow sensor die and a top cap. At 810, the method includes providing a flow sensor die having a flow sensor, and one or more bond pads face a first side of the flow sensor die. The one or more bond pads are electrically connected to the flow sensor as appropriate. This flow sensor die may be any suitable flow sensor die, such as flow sensor dies 100, 200, 550, 650, and 750, and variations on those dies. Providing the flow sensor die may include any suitable manufacturing or fabricating methods or techniques, such as those described elsewhere herein. At 820, the method includes providing a top cap, the top cap defining at least part of an inlet and/or outlet of the flow sensor assembly. This top cap may be any suitable cap as described herein, such as caps 552, 652, 752, and variations on those caps. Providing the top cap may include any suitable manufacturing or fabricating methods or techniques, such as those described elsewhere herein. At 830, the method includes attaching the top cap to the first side of the flow sensor die such that the top cap defines at least part of a flow channel that extends from the inlet, past the flow sensor, and to the outlet, and such that the top cap fluidly isolates the one or more bond pads from the fluid in the flow channel. Attaching the top cap to the flow sensor die may include any suitable attachment technique, such as those described elsewhere herein.

The disclosure should not be considered limited to the particular examples described above. Various modifications, equivalent processes, as well as numerous structures to which the disclosure can be applicable will be readily apparent to those of skill in the art upon review of the instant specification.

## Claims

1. A flow sensor assembly (500) for providing a measure of fluid flow from an inlet (556) to an outlet (558), the flow sensor assembly (500) comprising:
one or more flow sensor components (512) secured relative to a membrane;
a substrate (555) supporting the membrane, the one or more flow sensor components (512) being substantially thermally isolated from the substrate by the membrane;
one or more wire bond pads (554) situated adjacent to a first side of the substrate for communicating signals relative to the one or more flow sensor components (512); and
a top cap (552) situated adjacent to the first side of the substrate and secured relative to the substrate, the top cap (552) defining at least part of the inlet (556) and/or the outlet (558) of the flow sensor assembly (500), the top cap (552) at least partially defining a flow channel that extends from the inlet (556), past at least one of the one or more flow sensor components (512), and out the outlet (558) of the flow sensor assembly (500), the top cap (552) being structured and attached relative to the first side of the substrate such that the one or more wire bond pads (554) are not exposed to the flow channel but are accessible for electrical connection to an external device.

2. The flow sensor assembly (500) of claim 1, wherein the top cap (552) is formed substantially of a glass.

3. The flow sensor assembly (500) of claim 1, wherein the glass of the top cap (552) has a thermal conductivity of less than about 1.4 W/m·°K and a coefficient of thermal expansion within about 30% of a coefficient of thermal expansion of the substrate.

4. The flow sensor assembly (500) of claim 1, wherein the top cap (552) includes:
an upper cap wall (560); and
side walls (562) extending down from a perimeter of the upper cap wall (560), wherein the side walls (562) are attached relative to the first side of the substrate.

5. The flow sensor assembly (500) of claim 4, wherein the inlet (556) is formed through the upper cap wall (560).

6. The flow sensor assembly (500) of claim 4, wherein the outlet (558) is formed through the upper cap wall (560).

7. The flow sensor assembly (500) of claim 4, wherein the inlet (556) is formed through at least part of a first side wall of the top cap (552).

8. The flow sensor assembly (500) of claim 7, wherein the outlet (558) is formed through at least part of a second side wall of the top cap (552).

9. The flow sensor assembly (500) of claim 8, wherein at least part of the inlet (556) and at least part of the outlet (558) are defined at least in part by the substrate.

10. The flow sensor assembly (500) of claim 1, wherein the top cap (552) is substantially transparent.

11. A method of forming a flow sensor assembly (500) having a flow sensor die and a top cap (552), the method comprising:
providing a flow sensor die having a flow sensor, and one or more bond pads on a first side of the flow sensor die that are electrically connected to the flow sensor;
providing a top cap (552), the top cap (552) defining at least part of an inlet (556) and/or outlet (558) of the flow sensor assembly (500); and
attaching the top cap (552) to the first side of the flow sensor die such that the top cap (552) defines at least part of a flow channel that extends from the inlet (556), past the flow sensor, and to the outlet (558), and such that the top cap (552) fluidly isolates the one or more bond pads from the flow channel.

12. The method of claim 11, wherein the top cap (552) includes an upper cap wall (560) and side walls (562) extending down from a perimeter of the upper cap wall (560), wherein the side walls (562) are attached to the first side of the flow sensor die, the method further comprising:
forming a first depression in the top cap (552), wherein the first depression extends to an edge of the top cap (552);
forming a second depression in the flow sensor die, wherein the second depression extends to an edge of the flow sensor die; and
aligning the top cap (552) with the flow sensor die such that the first depression is in registration with the second depression such that the first depression in the top cap (552) in conjunction with the second depression in the flow sensor die define the inlet (556) and/or outlet (558) of the flow sensor assembly (500).
